Europäisches Patentamt

European Patent Office

Office européen des brevets

(11) Veröffentlichungsnummer : **0 211 284**
**B1**

(19)

# (12) EUROPÄISCHE PATENTSCHRIFT

(45) Veröffentlichungstag der Patentschrift :
03.01.90

(21) Anmeldenummer : 86109754.1

(22) Anmeldetag : 16.07.86

(51) Int. Cl.⁵ : **E 04 F 15/02**, H 05 F   3/02,
C 04 B 41/85

(54) **Plattenartiges keramisches Element mit elektrisch leitender Oberflächenglasur auf der Sichtseite.**

(30) Priorität : 18.07.85 DE 3525675
23.07.85 DE 3526326

(43) Veröffentlichungstag der Anmeldung :
25.02.87 Patentblatt 87/09

(45) Bekanntmachung des Hinweises auf die Patenterteilung : 03.01.90 Patentblatt 90/01

(84) Benannte Vertragsstaaten :
AT BE CH DE FR GB IT LI LU NL SE

(56) Entgegenhaltungen :
CH—A—   519 071
DE—B— 1 771 361
FR—A— 2 204 097
GB—A— 1 202 924
US—A— 3 755 713
US—A— 4 456 944

(73) Patentinhaber :   Buchtal   Gesellschaft   mit   beschränkter Haftung
Buchtalweg
D-8472 Schwarzenfeld(Opf.) (DE)

(72) Erfinder : **Bard, Martin**
Seminargasse 26
D-8450 Amberg (DE)

(74) Vertreter : **Bockhorni, Josef, Dipl.-Ing.**
Herrmann-Trentepohl, Kirschner, Grosse, Bockhorni
& Partner Forstenrieder Allee 59
D-8000 München 71 (DE)

EP 0 211 284 B1

## Beschreibung

Die Erfindung betrifft ein plattenartiges keramisches Element das auf seiner Sichtseite mit einer elektrisch leitenden Oberflächenglasur versehen ist, die bei Verlegung des plattenartigen keramischen Elementes zusammen mit mehreren solcher Elemente zu einem Belag für Wand- oder Fußbodenbekleidungen mit einer unter dem Belag vorzusehenden elektrisch ableitenden Unterkonstruktion in Verbindung steht. Aus solchen Platten hergestellte Beläge dienen beispielsweise als Bodenbeläge für Operationssäle, Laboratorien, feuergefährdete Industrieräume, wie Lackiereien, Lackfabriken, Lagerhallen für leicht entzündbare Lösungsmittel usw. Neu hinzugekommen ist die Anwendung in Bereichen, in denen eine spürbare Entladung bei Personen vermieden werden soll, beispielsweise in Büroräumen, in denen Computer und ähnliche elektrische und elektronische Geräte aufgestellt sind.

An Fußbodenbeläge in Operationssälen u. dgl. wird die Anforderung gestellt, daß eine ständige Ableitung von statischer Elektrizität gewährleistet ist und zugleich verhindert wird, daß ein Abfluß von Strom in gefährlicher Stärke beim Berühren mangelhaft isolierter stromführender Teile durch den menschlichen Körper erfolgt. Dies bedeutet im allgemeinen, daß die Beläge einen elektrischen Widerstand in der Größenordnung von $10^4$ bis $10^6$ Ohm aufweisen müssen.

Die bisher verwendeten Bodenbeläge in Form von PVC- und anderen Kunststoffbelägen leiden darunter, daß ihre Beständigkeit gegen organische Lösungsmittel und andere Chemikalien zu wünschen übrig läßt. Außerdem müssen für solche Bodenbeläge zu ihrer Verbindung mit dem Unterboden elektrisch leitende Kleber verwendet werden, die hinsichtlich ihrer Leitfähigkeit über längere Zeiträume nicht stabil sind.

Man ist deshalb bereits dazu übergegangen, keramische Fußbodenfliesen zu verwenden, die durch Brennen von geformten Mischungen aus Steinzeug- oder Töpferton und Eisenoxid in einer beim Brennen von Bodenfliesen üblichen Atmosphäre hergestellt worden sind. Als Beispiel für ein Verfahren zur Herstellung solcher elektrisch halbleitender keramischer Fußbodenfliesen sei die DE-B-17 71 361 genannt. Durch die Beimengung von Eisenoxiden in das keramische Material erhält man allerdings dunkel gefärbte unglasierte keramische Oberflächen. Außerdem ist die Bandbreite der Leitfähigkeit solcher elektrisch leitend gemachter Bodenfliesen ungenügend.

In Baukeramik 8/84, Seite 96, wird von der Firma Villeroy & Boch eine neue, grau-blaue Leitfliese im Format 15 × 15 cm vorgestellt, die in der praktischen, im Handel erhältlichen Ausführungsform aus einer Keramikplatte besteht, die einen über die Seitenkanten hinweggezogenen elektrisch leitenden Überzug aufweist. Die Ableitung der Elektrizität kann also nur über das an die Kanten einer solchen Platte anstoßende Fugenmaterial erfolgen, das in der Regel aus mit elektrisch leitend gemachtem Zement gebundenem Material besteht.

Schließlich ist ein plattenartiges keramisches Element bekannt (FR-A-2 204 097), welches mit einer elektrisch leitenden Oberflächenglasur versehen ist. Die Ableitung der statischen Elektrizität erfolgt über ein elektrisch leitfähiges Bindemittel, welches als Fugenfüller zwischen den Fugen benachbarter Elemente verwendet wird.

Dieses Fugenmaterial schwindet jedoch nach, so daß sich der elektrische Kontakt mit den Kantenseiten der Fliesen wenigstens teilweise lösen kann. Außerdem wäscht sich dieses Fugenmaterial bei den insbesondere in Operationsräumen außerordentlich häufig notwendig werdenden Reinigungsvorgängen sehr rasch aus, was ebenfalls zu einer Verminderung der Kontaktflächen führt. Damit ändert sich nicht nur der Ableitwiderstand, sondern es leidet auch die mechanische Belastbarkeit des Plattenbelages. Außerdem entstehen beim Schwinden bzw. beim Abgetragenwerden des Fugenmaterials zwischen Fliesenkanten und Fugenmaterial kleinste Räume, die sich mit Keimen zusetzen können, was für Operationssäle absolut untragbar ist. Die Platten sind, wie die zitierte Veröffentlichung zeigt, vergleichsweise kleinformatig, so daß der in der Prüfnorm verlangte Standortübergangswiderstand (VDE-Bestimmung 0100/5.73 24) nur durch den Fugenanteil erreicht wird.

Schließlich ist ein mehrschichtige Verkleidungsplatte bekannt (CH-A-519 071), die an beiden Seiten elektrisch leitfähige Schichten aufweist, die vorzugsweise aus Aluminium gebildet und mittels eines elektrisch nicht leitfähigen Leimes am Plattenkörper selbst befestigt sind, der beispielsweise aus Sperrholz- oder Holzspanplatten aufgebaut ist. Die Ableitung der statischen Elektrizität erfolgt über einen Belag an der Seitenfläche des Elements, der durch eine niedrigviskose, filmbildende Dispersion auf Kunststoffbasis unter Beimengung von Graphitteilchen gebildet ist. Ein solches Element ist aufwendig in der Herstellung. Ferner ist es erforderlich, den ableitenden Belag mit dem Fugenfüller abzustimmen oder umgekehrt.

Aufgabe der Erfindung ist es, die Verlegung eines solchen Bodenbelags völlig unabhängig vom Fugenmaterial zu machen, so daß ein Fugenmaterial gewählt werden kann, das hinsichtlich seiner Abriebfestigkeit, seiner Elastizität und hygienischen Eigenschaften allen an ein solches Material zu stellenden Forderungen in vollem Umfang gerecht wird.

Diese Aufgabe wird erfindungsgemäß durch die im kennzeichnenden Teil des Anspruches 1 enthaltenen Merkmale gelöst.

Ein besonderer Vorteil der erfindungsgemäßen Ausgestaltung des plattenartigen keramischen Elementes besteht darin, daß das Fugenmaterial als Ableitungselement überhaupt nicht mehr in Betracht gezogen zu werden braucht. Es kann also jedes Fugenmaterial auf der Basis von Epoxydharzen, die sich für den besonderen Verwendungszweck, beispielsweise in Operationsräumen oder dgl. besonders eignen, verwendet werden.

Da das Fugenmaterial keine Rolle hinsichtlich der Ableitung der Elektrizität spielt, können die Plattenabmessungen beliebig groß gewählt werden. Damit läßt sich die Relation zwischen Plattenfläche und Fugenfläche bei solchen Wand- bzw. Bodenverkleidungen auf einen optimalen Wert bringen, d. h., der Fugenflächenanteil auf ein Minimum reduzieren. Ferner läßt sich über die Kantenbeschichtung eine innigere Verbindung der Oberflächenglasur mit der Beschichtung auf der der Sichtseite abgewendeten Seite erzielen, beispielsweise dadurch, daß die Oberflächenglasur noch etwas über die Seitenkantenbeschichtung gezogen wird. Dadurch wird außerdem die Möglichkeit geschaffen, optisch ein besseres Bild zu erzielen, wenn das Fugenmaterial in der Fuge nicht bündig mit der Oberfläche des Belages abschließt. Wählt man ein Beschichtungsmaterial, dessen Schmelzpunkt wesentlich höher als der Schmelzpunkt der Oberflächenglasur liegt, dann kann das plattenartige keramische Element im Einmalbrand hergestellt werden, weil die Beschichtung auf der der Sichtseite abgewendeten Seite in dem Temperaturbereich, in dem die Oberflächenglasur zu fließen beginnt, lediglich sintert und damit ein Anhaften oder Ankleben des plattenartigen keramischen Elementes auf dem Transportmittel verhindert ist. Würde man nämlich anstelle dieser Beschichtung ein Material ähnlich dem Material der Oberflächenglasur verwenden, dann würde dieses Material im entsprechenden Brennintervall fließen und es würde damit zu einem Verkleben der der Sichtseite abgewendeten Seite des plattenartigen keramischen Elementes mit dem Transportmittel kommen.

Zweckmäßig geht die Oberflächenglasur an der Kante unmittelbar in die Kantenbeschichtung über. Es ist aber auch möglich, die Kantenbeschichtung nur örtlich vorzusehen. Ähnliches gilt auch für den Übergang der Kantenbeschichtung in die Beschichtung auf der der Sichtseite abgewendeten Seite. Dort muß die Beschichtung nicht unbedingt vollflächig sein, es genügt gegebenenfalls, wenn sie einen Teil der der Sichtseite abgewendeten Seite überdeckt.

Gemäß einer abgeänderten Ausführungsform nach der Erfindung ist die Beschichtung erst nach dem Brand des mit der Oberflächenglasur versehenen plattenartigen Elementes durch Auftragen einer leitenden Paste oder eines leitenden Lackes mit anschließendem Sintern oder Verfestigen durch Wärmeeinwirkung oder durch Aufdampfen oder Plasmaspritzen einer leitenden Substanz hergestellt. Auch ein Tauchvorgang oder ein anderes geeignetes Auftragverfahren kommen in Betracht.

Da in jedem Fall der elektrische Widerstand der Beschichtung wesentlich geringer ist als derjenige der Oberflächenglasur, ist ausschließlich der elektrische Widerstand der Oberflächenglasur für die Leitfähigkeit des entsprechenden plattenartigen keramischen Elementes verantwortlich, läßt sich somit exakt einstellen und bleibt auch über die Dauer erhalten.

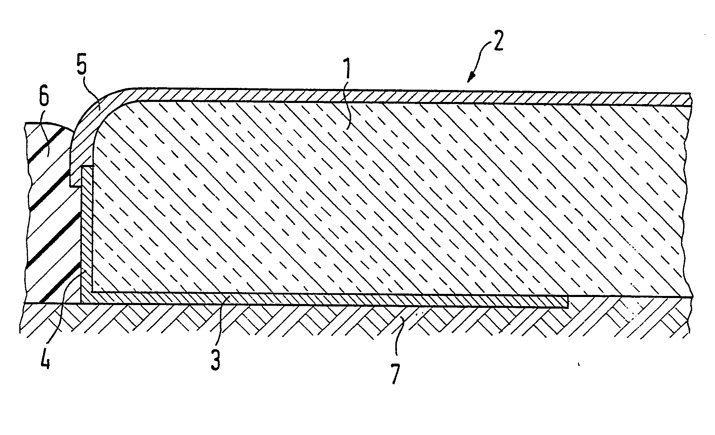

Zum Stande der Technik gehört auch noch die GB-A-1 202 924. Bei der hier allein interessierenden Ausführungsform nach Fig. 2 dieser Patentschrift besteht der Boden aus einer Schicht von Bitumenfilz, die über eine Betonunterlage ausgelegt ist. Der Bitumenfilz ist an den Kanten nach oben hochgebogen. Ober den Bitumenfilz sind eine oder mehrere Schichten aus mit Bitumen überzogenem Polyäthylen-Schichtmaterial ausgelegt und an den kanten ebenfalls hochgebogen. Dann werden Kupferstreifen auf diesem Schichtmaterial ausgelegt und über wenigstens zwei Widerstände an Masse geschaltet. Der Bodenbelag selbst besteht aus Terrazzo-Platten. Diese Terrazzo-Platten oder -Fliesen sind Spezialfliesen, die die entsprechende Leitfähigkeit dadurch erhalten haben, daß man einen entsprechenden leitenden Zusatz in das Gemenge vor der Herstellung der Platten oder Fliesen eingebaut hat. Erkennbar wird hier weder das der Erfindung zugrunde liegende Problem noch dessen Lösung angesprochen, denn beim Erfindungsgegenstand wird davon ausgegangen, daß die Glasur elektrisch leitend sein soll, wobei es darum geht, vom Fugenmaterial unabhängig zu werden.

Die einzige Figur zeigt einen Schnitt durch eine Ausführungsform eines plattenartigen keramischen Elementes nach der Erfindung.

1 bedeutet einen plattenförmigen keramischen Körper, der auf seiner der Sichtseite 2 abgewendeten Seite eine sich wenigstens teilweise über diese Seite erstreckende Beschichtung 3 aufweist, die an der Seitenkante in eine Kantenbeschichtung 4 übergeht, über die sich wenigstens teilweise die Oberflächenglasur 5 legt, die sich über die gesamte Sichtseite 2 des keramischen Körpers 1 erstreckt. Bei 6 erkennt man die Fugenmasse, die beispielsweise aus einem Epoxidharz besteht und keinerlei elektrische Leitfähigkeit aufzuweisen braucht, weil Elektrizität über die Glasur 5, die Kantenbeschichtung 4 und die auf der der Sichtseite abgewendeten Seite vorhandene Beschichtung 3 unmittelbar in ein ableitendes Element 7 abfließen kann.

Oberflächenglasur 5 und Beschichtung 3/4 bestehen aus Materialien unterschiedlicher Leitfähigkeit. Die Leitfähigkeit der Beschichtung 3/4 ist höher als die der Oberflächenglasur 5. Im Falle einer elektrisch leitenden keramischen Beschichtung liegt der Schmelzpunkt des Beschichtungsmaterials höher als der des Oberflächenglasurmaterials, so daß das Beschichtungsmaterial beim Brennen des keramischen Körpers 1 nur sintert, aber nicht schmilzt und damit auch nicht mit der Brennunterlage verkleben kann.

## Patentansprüche

1. Plattenartiges keramisches Element, das auf seiner Sichtseite (2) mit einer elektrisch leitenden Oberflächenglasur (5) versehen ist, die bei Verlegung des plattenartigen keramischen Elementes mit mehreren solcher Elemente zu einem Belag für Wand- oder Fußbodenbekleidungen mit einer unter dem Belag vorzusehenden, Elektrizität ableitenden Unterkonstruktion (7) leitend in Verbindung steht, dadurch gekennzeichnet, daß wenigstens ein Teil der der Sichtseite (2) abgewandten Seite des plattenartigen keramischen Elementes (1) mit einem elektrisch gut leitenden Material beschichtet ist, das mit der Oberflächenglasur (5) elektrisch leitend in Verbindung steht, daß die Oberflächenglasur (5) mit der Beschichtung (3) auf der der Sichtseite (2) abgewandten Seite über eine Kantenbeschichtung (4) an wenigstens einer Seitenkante elektrisch leitend in Verbindung steht, die aus dem gleichen Material ist wie die der Beschichtung (3) auf der der Sichtseite (2) des plattenartigen keramischen Elementes (1) abgewandten Seite, und daß die Beschichtung (3) auf der der Sichtseite (2) abgewandten Seite des plattenartigen keramischen Elementes (1) aus einem elektrisch gut leitenden Material besteht, dessen Schmelzpunkt wesentlich höher als der Schmelzpunkt der Oberflächenglasur (5) liegt.

2. Plattenartiges keramisches Element nach Anspruch 1, dadurch gekennzeichnet, daß die Oberflächenglasur (5) an der Kante unmittelbar in die Kantenbeschichtung (4) übergeht.

3. Plattenartiges keramisches Element nach Anspruch 2, dadurch gekennzeichnet, daß die Kantenbeschichtung (4) unmittelbar in die Beschichtung (3) auf der Sichtseite (2) abgewendeten Seite übergeht.

4. Plattenartiges keramisches Element nach einem der vorhergehenden Ansprüche, dadurch gekennzeichnet, daß es bei einer Plattenstärke von ca. 8 mm und weniger und Abmessungen von 60 × 60 cm bis 120 × 120 cm aufweist.

5. Verfahren zur Herstellung eines plattenartigen keramischen Elements (1) nach einem der Ansprüche 1 bis 4 dadurch gekennzeichnet, daß die Beschichtung (3, 4) nach dem Brand des mit der Oberflächenglasur (5) versehenen Elements (1) durch Auftragen einer leitenden Paste oder eines leitenden Lackes oder durch Aufdampfen oder Plasmaspritzen einer leitenden Substanz hergestellt wird.

## Claims

1. A tile-like ceramic element provided on its visible side (2) with an electrically conductive surface glaze (5) which, when the tile-like ceramic element is laid with a plurality of such elements to form a covering for lining walls or floors, communicates conductively with a substructure (7) which diverts electricity and is to be provided under the covering, characterized in that at least part of the side of the tile-like ceramic element (1) facing away from the visible side (2) is coated with a material having good electrically conductive properties which communicates with the surface glaze (5) in electrically conductive fashion, that the surface glaze (5) communicates in electrically conductive fashion with the coating (3) on the side facing away from the visible side (2) via an edge coating (4) on at least one side edge, which is of the same material as the coating (3) on the side facing away from the visible side (2) of the tile-like ceramic element (1), and that the coating (3) on the side of the tile-like ceramic element (1) facing away from the visible side (2) is made of a material having good electrically conductive properties whose melting point is substantially higher than the melting point of the surface glaze (5).

2. The tile-like ceramic element according to claim 1, characterized in that the surface glaze (5) runs at the edge directly into the edge coating (4).

3. The tile-like ceramic element according to claim 2, characterized in that the edge coating (4) runs directly into the coating (3) of the side facing away from the visible side (2).

4. The tile-like ceramic element according to any of the preceding claims, characterized in that it has dimensions of 60 × 60 cm to 120 × 120 cm with a tile thickness of approximately 8 mm and less.

5. Method of producing a tile-like ceramic element (1) according to any of the claims 1 to 4, characterized in that the coating (3, 4) is produced after firing of the element (1) provided with the surface glaze (5) by applying a conductive paste or a conductive varnish or by vacuum metallizing or plasma spraying of a conductive substance.

## Revendications

1. Elément céramique en forme de plaque, muni sur sa face visible (2) d'une glaçure de surface (5) conductrice de l'électricité qui, lors de la pose de l'élément céramique en forme de plaque avec plusieurs éléments de ce type pour former une couche de revêtement de mur ou de sol, se raccorde avec une infrastructure (7) conductrice de l'électricité à prévoir sous la couche de revêtement, caractérisé en ce qu'au moins une partie de la face opposée à la face visible (2) de l'élément céramique en forme de plaque (1) est recouverte avec un matériau bon conducteur de l'électricité, qui est raccordé de façon à conduire l'électricité avec la glaçure de surface (5), en ce que la glaçure de surface (5) est raccordée, de façon à conduire l'électricité, avec le revêtement (3), sur la face opposée à la face visible (2), par l'intermédiaire d'un revêtement latéral (4) à au moins une arète latérale, qui est constitué du même matériau que le revêtement (3) sur la face opposée à la face visible (2), et en ce que le revêtement 3 sur la face opposée à la face visible (2) de l'élément céramique en forme de plaque (1) est constitué d'un matériau bon conducteur de l'électricité dont le point de fusion se trouve essentiellement plus haut que celui de la glaçure de surface (5).

2. Elément céramique en forme de plaque suivant la revendication 1, caractérisé en ce que la glaçure de surface (5) déborde sur l'arête directement dans le revêtement (4) de l'arête.

3. Elément céramique en forme de plaque suivant la revendication 2, caractérisé en ce que le revêtement de l'arête (4) déborde directement dans le revêtement (3) sur la face opposée à la face visible (2).

4. Elément céramique en forme de plaque suivant l'une quelconque des revendications précédentes, caractérisé en ce qu'il présente des dimensions allant de 60 × 60 cm à 120 × 120 cm avec une épaisseur de plaque de 8 cm et moins.

5. Procédé de fabrication d'un élément céramique en forme de plaque (1) suivant l'une quelconque des revendications 1 à 4, caractérisé en ce que le revêtement (3, 4), après cuisson de l'élément (1) muni de la glaçure de surface (5), est fabriqué avec apport d'une pâte conductrice de l'électricité ou d'une laque conductrice de l'électricité ou avec vaporisation ou projection sous plasma d'une substance conductrice de l'électricité.